(19) Europäisches Patentamt
European Patent Office
Office européen des brevets

(11) **EP 2 899 828 B1**

(12) **EUROPÄISCHE PATENTSCHRIFT**

(45) Veröffentlichungstag und Bekanntmachung des Hinweises auf die Patenterteilung:
**29.12.2021 Patentblatt 2021/52**

(51) Int Cl.:
***H02J 3/14*** *(2006.01)*

(21) Anmeldenummer: **15150328.1**

(22) Anmeldetag: **07.01.2015**

(54) **Steuervorrichtung für eine elektrische Anlage zum Wiederanfahren der elektrischen Anlage nach einem Stromausfall**

Control device of an electrical installation for restarting the electrical installation following a power outage

Système de commande pour une installation électrique destinée au redémarrage de l'installation électrique après une panne de courant

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2014 DE 102014000917**

(43) Veröffentlichungstag der Anmeldung:
**29.07.2015 Patentblatt 2015/31**

(73) Patentinhaber: **RWE Deutschland AG**
**45128 Essen (DE)**

(72) Erfinder:
• **Gaul, Dr.-Ing. Armin**
**59379 Selm (DE)**

• **Daniel, Dr. Kai**
**44879 Bochum (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A2- 2 273 647       WO-A1-2005/029670**
**WO-A1-2012/000538    DE-A1-102011 006 609**
**DE-A1-102012 201 315   GB-A- 2 426 878**
**US-A1- 2014 001 845**

**Beschreibung**

Die Erfindung betrifft eine Steuervorrichtung für eine in einem Energieversorgungsnetz angeordnete elektrische Anlage zum Steuern des Wiederanfahrens der elektrischen Anlage nach einem Stromausfall in dem Energieversorgungsnetz umfassend mindestens eine Detektionseinrichtung eingerichtet zum Detektieren von mindestens einer ersten Einschaltbedingung. Darüber hinaus betrifft die Erfindung eine elektrische Anlage umfassend die Steuervorrichtung und ein Verfahren zum Steuern des Wiederanfahrens einer in einem Energieversorgungsnetz angeordneten elektrischen Anlage nach einem Stromausfall in dem Energieversorgungsnetz.

Aus dem Stand der Technik sind verschiedene Maßnahmen bekannt, um einen Stromausfall in einem elektrischen Energieversorgungsnetz zu vermeiden. So wird unter anderem im Stand der Technik vorgeschlagen, in einem Notfall Verbraucher abzuschalten, um einen großflächigen Totalausfall des Stromnetzes aufgrund einer Überlastung zu vermeiden. Auch ist es beispielsweise aus der DE 10 2009 050 042 A1 bekannt, intelligente Ladesäulen für Elektrofahrzeuge im Notfall zur Stabilisierung des Stromnetzes zu nutzen. Diese im Stand der Technik beschriebenen Maßnahmen können jedoch nur vorbeugend eingesetzt werden, um die Wahrscheinlichkeit eines Stromausfalls zu verringern. Ein Stromausfall kann jedoch hierdurch nicht ausgeschlossen werden.

Kann ein großflächiger Ausfall der elektrischen Energieversorgungsnetze, auch Schwarzfall oder Stromausfall genannt, nicht verhindert werden, ist ein zuverlässiges und effizientes Wiederanfahren des Energieversorgungsnetzes erforderlich. In der Regel werden zunächst Subnetze des ausgefallenen Gesamtnetzes sukzessiv mit Hilfe von konventionellen Kraftwerken, wie Kohlekraftwerken oder Kernkraftwerken, angefahren. Insbesondere wird die Systemfrequenz, also die Stromfrequenz und die Spannungsfrequenz, die in Deutschland bei 50 Hz liegt (anderen Ländern 60 Hz), durch die konventionellen Kraftwerke stabilisiert. Im Anschluss daran werden die verschiedenen Subnetze wieder zusammengeführt. Insbesondere erfolgt eine phasensynchrone Zusammenführung der einzelnen Subnetze bzw. Energieversorgungsnetze.

Bei dem oben beschriebenen Wiederanfahren des Energieversorgungsnetzes gehen sämtliche an dem Energieversorgungsnetz angeschlossene elektrische Anlagen, wie elektrische Verbraucher oder elektrische Erzeuger, spontan bei Detektion einer vorgegebenen Einschaltbedingung unmittelbar wieder ans Energieversorgungsnetz. Mit anderen Worten aktivieren sich die elektrischen Verbraucher und/oder elektrischen Erzeuger nach Detektion der Einschaltbedingung unmittelbar selbst.

Detektiert beispielsweise ein Verbraucher, wie ein Kühlschrank, dass der Stromausfall vorbei ist und die Einschaltbedingung, beispielswese ein Vorliegen einer Spannung von 230 V, vorliegt, dann schaltet sich der Verbraucher automatisch an und geht mit seiner vollen Last unmittelbar wieder ans Energieversorgungsnetz. Grund hierfür ist beispielsweise, dass sich nach einem längeren Stromausfall ein Kühlschrank deutlich erwärmt hat und sich daher der Kühlschrank automatisch auf seine maximale Sollkühlleistung setzt. Da dies sämtliche gleichartige Verbraucher gleichzeitig durchführen, aktivieren sich diese Verbraucher nach einem Stromausfall im Wesentlichen zeitgleich. Eine hohe Leistung muss daher bei hoher Gleichzeitigkeit bereitgestellt werden. Übersteigt die aggregierte Leistung vieler (gleichartiger) Verbraucher beim Einschalten die Primärregelenergiereserven des Energieversorgungsnetzes, kann dies zum wiederholten Stromausfall führen.

Ähnlich verhält es sich mit elektrischen, dezentral angeordneten, Energieerzeugern, wie Windkraftanlagen, Photovoltaikanlagen bzw. Solarenergieanlagen, Kraftwärmekopplungsanlagen, etc. Sobald diese Erzeuger eine Einschaltbedingung detektieren, schalten bzw. aktivieren sie sich unmittelbar. Dies hat zur Folge, dass sich sämtliche gleichartige Erzeuger nach einem Stromausfall im Wesentlichen zeitgleich aktivieren und insbesondere die maximale Leistung unmittelbar in das Energieversorgungsnetz speisen.

Insbesondere der zuletzt genannte Fall wird zu einem immer größer werdenden Problem, da der Anteil der dezentral angeordneten Erzeugern stetig wächst, während der Anteil der herkömmlichen, insbesondere zur Netzstabilisierung nach einem Stromausfall bzw. Blackout verwendeten Kraftwerke, stetig sinkt.

Wie bereits beschrieben wurde, schalten nach einem Stromausfall Verbraucher und Erzeuger spontan und ohne Intelligenz wieder ein. Das nahezu gleichzeitige Zuschalten der vertikalen Netzlast im Energieversorgungsnetz bzw. Verteilnetz (Erzeugern/Lasten) übersteigt hierdurch den systemkritischen, also zulässigen, Leistungsgradienten der Regelzone(n), wie dem Subnetz bzw. Energieversorgungsnetz. Insbesondere ändert sich aufgrund der hohen Flankensteilheit der schlagartig fluktuierenden Leistung die Netzfrequenz (steigende Netzfrequenz bei Überspeisung/Unterlast, sinkende Frequenz bei Unterspeisung/Überlast) nahezu unmittelbar. Dies führt dazu, dass mindestens eine Ausschaltbedingung, insbesondere das Erreichen von mindestens einem vorgeschriebenen Schwellwert bzw. Kriterium, wie ein bestimmter Spannungsgrenzwert oder Frequenzgrenzwert, von den Verbrauchern und/oder Erzeugern detektiert wird und daher diese elektrischen Anlagen sich wieder nahezu unmittelbar und gleichzeitig ausschalten bzw. deaktivieren. Das Greifen der lokalen Schutzmechanismen führt daher direkt wieder zu einem erneuten Ausfall des kompletten elektrischen Energieversorgungsnetzes bzw. einem großen Teil hiervon. Dieser Effekt wird sich aller Voraussicht nach wiederholen, so dass ein stabiles Anfahren des Energieversorgungsnetzes und der daran angeschlossenen elektrischen Anlagen nahezu unmöglich wird (bekannter Domino-Effekt).

Durch die hohe Anzahl von verteilten Erzeugern wird zudem auch zukünftig eine zentrale Steuerung des Anfahrprozesses nach einem großflächigen Stromausfall fast unmöglich sein. Insbesondere scheint eine nachrichtentechnische Anbindung sämtlicher dezentraler Erzeuger für eine zentrale Steuerung bzw. Regelung nicht realistisch.

Die Druckschrift EP 2 273 647 A2 beschreibt eine steuerbare elektrische Anlage und ein Steuern des Hochfahrens der Anlage. Die Druckschrift US 2014/001845 A1 offenbart ein Laststeuergerät, das direkt an eine Stromversorgungsleitung, die elektrischen Strom unter Verwendung von Wechselstrom führt, und an eine Last angeschlossen ist, die von einem Gerät am Standort bereitgestellt wird, wobei an der Laststeuervorrichtung die Werte für einen oder mehrere lastabhängige Parameter der elektrischen Leistung über einen bestimmten Zeitraum überwacht werden.

Es ist daher die Aufgabe der vorliegenden Erfindung, eine Steuervorrichtung für eine elektrische Anlage zur Verfügung zu stellen, welche nach einem Stromausfall in einem Energieversorgungsnetz ein stabiles Wiederanfahren des Energieversorgungsnetzes ermöglicht.

Diese Aufgabe wird gemäß einem ersten Aspekt der Erfindung mit einer Steuervorrichtung nach Anspruch 1 und durch ein Verfahren nach Anspruch 10 gelöst.

Die Steuervorrichtung für eine in einem Energieversorgungsnetz angeordnete elektrische Anlage zum Steuern des Wiederanfahrens der elektrischen Anlage nach einem Stromausfall in dem Energieversorgungsnetz umfasst mindestens eine Detektionseinrichtung eingerichtet zum Detektieren von mindestens einer ersten Einschaltbedingung, wobei die Steuervorrichtung ferner umfasst: mindestens eine Steuereinrichtung eingerichtet zum Bestimmen einer ersten Einschaltverzögerungszeitspanne nach Detektion der ersten Einschaltbedingung, wobei die erste Einschaltverzögerungszeitspanne eine zufällige Zeitspanne ist, und wobei die Steuereinrichtung eingerichtet ist, ein Herstellen einer elektrischen Verbindung zwischen der elektrischen Anlage und dem Energieversorgungsnetz frühestens nach Ablauf der ersten Einschaltverzögerungszeitspanne zu bewirken, und die zufällige erste Einschaltverzögerungszeitspanne zwischen einem minimalen Zeitgrenzwert und einem maximalen Zeitgrenzwert liegt, und die Steuereinrichtung zum Bestimmen des minimalen Zeitgrenzwerts und des maximalen Zeitgrenzwerts in Abhängigkeit von mindestens einem Parameter ausgewählt aus der Gruppe umfassend: Systemklasse der elektrischen Anlage, regelbare Netzlast oder nicht regelbare Netzlast der elektrischen Anlage, Art der Netzlast der elektrischen Anlage, Höhe der Nennleistung der Netzlast der elektrischen Anlage, historische Daten der elektrischen Anlage, lokale Uhrzeit der elektrischen Anlage, Dauer des Stromausfalls, eingerichtet ist.

Indem eine Regelvorrichtung (bzw. Steuervorrichtung), insbesondere eine Agentenbasierte-Regelvorrichtung, für eine (dezentrale) elektrische Anlage bereitgestellt wird, wobei die Regeleinrichtung ein Aktivieren der elektrischen Anlage erst nach Ablauf einer zufälligen Einschaltverzögerungszeitspanne erlaubt, wird ein gleichzeitiges und unmittelbares Aktivieren sämtlicher elektrischer Anlagen in dem Energieversorgungsnetz verhindert.

Die Regelvorrichtung (bzw. Steuervorrichtung), beispielsweise ein Hardware- und/oder Softwaremodul, kann in einer elektrischen Anlage integriert sein und/oder an dieser angeschlossen sein. Beispielsweise kann die Regelvorrichtung als Steuerbox zwischen einem Smart Meter Gateway und einer Erzeugungsanlage realisiert sein. Die elektrische Anlage, wie ein Verbraucher oder ein Energieerzeuger, ist an ein Energieversorgungsnetz angeschlossen. Nach einem Stromausfall in dem Energieversorgungsnetz, insbesondere in einem weiteren Bereich des Gesamtenergieversorgungsnetzes, wird die elektrische Anlage (automatisch) deaktiviert. Mit anderen Worten wird von der elektrischen Anlage keine elektrische Energie ins Netz gespeist und/oder von ihr abgegriffen. Ein Energieversorgungsnetz umfasst vorliegend mindestens ein Ortsnetz, Mittelspanungsnetz und/oder Hochspannungsnetz. Das Energieversorgungsnetz kann insbesondere die Einspeiser und Lasten, die sich nicht in der Hand des Netzbetreibers befinden, umfassen.

Die Regelvorrichtung (bzw. Steuervorrichtung) umfasst eine Detektionseinrichtung zum Detektieren von mindestens einer ersten Einschaltbedingung. Unter der Detektion einer Einschaltbedingung ist zu verstehen, dass die Einschaltbedingung erfüllt ist. Die mindestens eine erste Einschaltbedingung definiert, wann eine Aktivierung der elektrischen Anlage nach einem Stromausfall grundsätzlich wieder möglich ist. Beispielsweise kann eine erste Einschaltbedingung sein, dass mindestens ein Netzparameter, wie eine Netzspannung, ein Netzstrom oder eine Netzfrequenz, (lokal) auf dem Energieversorgungsnetz, also einer Energieversorgungsleitung, vorhanden ist. Es versteht sich, dass eine Mehrzahl von ersten Einschaltbedingungen vorgegeben werden können. Ferner versteht es sich, dass die Erfüllung einer ersten Einschaltbedingung oder eine Erfüllung von zwei oder mehr ersten Einschaltbedingungen für ein positives Detektionsergebnis vorliegen muss/müssen. Wenn die Detektionsvorrichtung die mindestens eine erste Einschaltbedingung detektiert, also ein Aktivieren bzw. Einschalten der elektrischen Anlage grundsätzlich möglich wäre, dann bestimmt die Regeleinrichtung (vor der Aktivierung) eine zufällige erste Einschaltverzögerungszeitspanne. Die Einschaltverzögerungszeitspanne ist insbesondere ein Zeitraum, um den die Aktivierung der elektrischen Anlage (mindestens) verzögert wird. Mit anderen Worten bleibt eine Aktivierung bzw.

Zuschaltung der elektrischen Anlage vor dem Ablauf der ersten Einschaltverzögerungszeitspanne gesperrt. Die Regeleinrichtung (bzw. Steuereinrichtung) kann beispielsweise einen geeigneten Zufallsgenerator zum Bestimmen der ersten Einschaltverzögerungszeitspanne aufweisen.

Frühestens nach Ablauf der ersten Einschaltverzögerungszeitspanne kann die Regeleinrichtung ein Herstellen einer elektrischen Verbindung zwischen der elektrischen Anlage und dem Energieversorgungsnetz bewirken und beispielsweise ein Aktivierungssignal generieren und senden. Es kann eine direkte Schaltung bzw. Aktivierung der elektrischen Anlage bewirkt werden. So kann die Umsetzung über ein Relais oder einen (direkten) Steuerimpuls, also insbesondere durch eine direkte Schaltung, erfolgen. Das Aktivierungssignal kann dazu eingerichtet sein, ein Aktivieren bzw. Einschalten der elektrischen Anlage freizugeben. Insbesondere kann eine Schalteinrichtung der elektrischen Anlage angesteuert werden. Ein Schalter der Schalteinrichtung kann (nur) nach Erhalt des Aktivierungssignals geschlossen werden, so dass eine elektrische Kopplung zwischen der elektrischen Anlage und dem Energieversorgungsnetz hergestellt werden kann. Dann kann die elektrische Anlage in herkömmlicher Weise, jedoch zeitversetzt, angefahren werden.

Durch die erfindungsgemäße Steuervorrichtung wird verhindert, dass sich eine Vielzahl von elektrischen Anlagen (nahezu) gleichzeitig nach einem Stromausfall einschalten. Jede elektrische Anlage umfassend die Steuervorrichtung (frühestens) nach dem Ablauf einer zufälligen Zeitspanne ein. Hierdurch kann verhindert werden, dass die vertikale Netzlast den systemkritischen, also zulässigen, Leistungsgradienten der Regelzone(n), wie dem Energieversorgungsnetz, übersteigt. Die Flankensteilheit kann verringert werden. Ein langsames und stabiles Hochfahren des Subnetzes bzw. des Energieversorgungsnetzes kann in einfacher Weise erreicht werden.

Gemäß einer ersten Ausführungsform der Steuervorrichtung der vorliegenden Erfindung kann mindestens eine Erfassungseinrichtung eingerichtet zum Erfassen von mindestens einem elektrischen Netzparameter vorgesehen sein. Mit anderen Worten kann eine Erfassungseinrichtung, wie ein Messinstrument, in der Regelvorrichtung integriert oder mit der Regelvorrichtung verbindbar sein. Beispielsweise kann die Erfassungseinrichtung bereits in der elektrischen Anlage vorhanden sein. Insbesondere kann die Erfassungseinrichtung mit der Detektionseinrichtung, z.B. einem Smart Meter Gateway, gekoppelt sein. Beispielsweise kann die Erfassungseinrichtung eingerichtet sein, die Netzfrequenz und/oder die Netzspannung und/oder den Netzstrom des Energieversorgungsnetzes zu erfassen. Insbesondere kann die/der lokale und aktuelle Netzfrequenz und/oder Netzspannung und/oder Netzstrom gemessen werden. Es versteht sich, dass der Regelvorrichtung verfügbare Messwerte bereitgestellt werden können. Diese können dann verarbeitet werden.

Die Detektionseinrichtung kann zum Vergleichen des erfassten Netzparameters mit einem ersten zulässigen Netzparameterbereich eingerichtet sein. Die Detektionseinrichtung kann zum Detektieren einer ersten Einschaltbedingung bei einem positiven Vergleichsergebnis eingerichtet sein. Mindestens einer der erfassten Netzparameter kann von der Detektionseinrichtung mit einem zulässigen ersten Netzparameterbereich, der durch einen minimalen und maximalen Grenzwert definiert ist, verglichen werden. Der zulässige erste Netzparameterbereich gibt insbesondere an, wann grundsätzlich ein Einschalten der elektrischen Anlage nach einem Stromausfall zulässig ist.

Vorzugsweise kann zumindest die Netzfrequenz erfasst werden. Liegt die Netzfrequenz außerhalb eines zulässigen Netzfrequenzbereichs (z.B. 49,8 Hz bis 50,2 Hz), dann ist das Vergleichsergebnis negativ. Die erste Einschaltbedingung liegt nicht vor. Liegt die erfasste Netzfrequenz hingegen innerhalb des zulässigen Netzfrequenzbereichs, dann ist das Vergleichsergebnis positiv und die erste Einschaltbedingung ist erfüllt. Es versteht sich, dass in entsprechender Weise alternativ oder zusätzlich die Netzspannung und/oder der Netzstrom ausgewertet werden kann.

Ferner wird gemäß der Erfindung vorgeschlagen, dass die erste Einschaltverzögerungszeitspanne eine zufällige Zeitspanne zwischen einem minimalen Zeitgrenzwert und einem maximalen Zeitgrenzwert ist. Insbesondere können sinnvolle Grenzen vorgegeben werden, um ein zu frühes aber auch ein (viel) zu spätes Aktivieren der elektrischen Anlage zu vermeiden. Der minimale Zeitgrenzwert kann im Bereich von wenigen Sekunden bis mehreren Stunden liegen. In entsprechender Weise kann der maximale Zeitgrenzwert im Bereich von wenigen Sekunden bis mehreren Stunden liegen.

Grundsätzlich können die Zeitgrenzwerte für sämtliche elektrische Anlagen stets im Wesentlichen gleich sein und beispielsweise bei der Erstinstallation vorgegeben werden. Vorzugsweise werden der maximale Zeitgrenzwert und der minimale Zeitgrenzwert individuell für jede elektrische Anlage zum Zeitpunkt der Detektion der ersten Einschaltbedingung von der Regelvorrichtung bestimmt. Gemäß der erfindungsgemäßen Steuervorrichtung die Steuereinrichtung zum Bestimmen des maximalen Zeitgrenzwerts und des minimalen Zeitgrenzwerts in Abhängigkeit von mindestens einem Parameter ausgewählt aus der Gruppe umfassend

- Systemklasse der elektrischen Anlage,
- regelbare Netzlast oder nicht regelbare Netzlast,
- Art der Netzlast,
- Höhe der Nennleistung der Netzlast der elektrischen Anlage,
- historische Daten der elektrischen Anlage,
- mindestens ein (lokal) erfasster Netzparameter,
- lokale Uhrzeit der elektrischen Anlage,
- der Dauer des Stromausfalls

eingerichtet. Indem die Eigenschaften der elektrischen Anlage und Umgebungsparameter bei der Bestimmung der ersten Einschaltverzögerungszeitspanne berücksichtigt werden, kann ein noch stabileres und sichereres Wiederanfahren des Energieversorgungsnetzes erreicht werden. Beispielsweise kann mindestens einer der Parameter in einer Bestimmungsregel abgebildet werden, die in der Regelvorrichtung implementiert sein kann. Die Regel kann beispielsweise direkt zur Bestimmung der zufälligen Einschaltverzögerungszeitspanne genutzt werden. Vorzugsweise kann die Einschaltverzögerungszeitspanne in Abhängigkeit von mindestens einem der oben genannten Parameter mittels eines Zustandsautomaten, eines Petri-Netzes, einer erweiterten ereignisgesteuerten Prozesskette (eEPK), eines durch einen Algorithmus umgesetztes Flussdiagramm und/oder dergleichen bestimmt/berechnet werden.

Vorliegend können die elektrischen Anlagen grundsätzlich in zwei verschiedene Systemklassen, nämlich Energieerzeuger und Verbraucher, unterteilt werden. In einem einfachen Fall kann vorgesehen sein, dass eine Systemklasse zumindest im Durchschnitt vor der anderen Systemklasse aktiviert werden soll. Entsprechend können die Zeitgrenzwerte für die verschiedenen Systemklassen gesetzt bzw. bestimmt werden.

Ferner ist erkannt worden, dass ein wesentliches Kriterium für ein frühzeitiges oder spätes Wiederanfahren einer elektrischen Anlage ist, ob es sich um eine regelbare oder nicht regelbare Netzlast handelt. Darunter ist zu verstehen, ob, beispielsweise mittels der Regelvorrichtung, die dem Energieversorgungsnetz zuschaltbare Netzlast regelbar ist. Ist eine Netzlast beispielsweise nur pauschal zuschaltbar, dann kann der minimale Zeitgrenzwert groß sein, während eine regelbare Netzlast frühzeitig zugeschaltet werden kann, da sie zum Stabilisieren des Energieversorgungsnetzes (aktiv) genutzt werden kann. Entsprechend kann eine Regel implementiert sein, dass eine regelbare Netzlast zumindest im Durchschnitt vor einer nicht regelbaren Netzlast aktiviert werden sollte.

Nicht abschließende Beispiele verschiedener Arten der Netzlast sind

-   Winderzeugungsanlagen,
-   Photovoltaikanlagen,
-   Blockheizkraftwerke,
-   Wärmepumpen,
-   ohmsche Verbraucher,
-   induktive/kapazitive Lasten.

Auch hier kann es sich als vorteilhaft erweisen, bestimmte Arten der Netzlast vor anderen Arten der Netzlast hinzuschalten und entsprechende Regeln zu implementieren. Beispielsweise kann bestimmt werden, ob aktuell ein Bedarf an Blindleistung besteht oder nicht. Insbesondere kann der Phasenwinkel zwischen Netzspannung und Netzstrom ausgewertet werden.

Auch die Höhe der Nennleistung der Netzlast der elektrischen Anlage kann als Parameter berücksichtigt werden. Beispielhaft kann eine Regel implementiert werden, wonach elektrische Anlagen mit einer Netzlast in einem ersten Bereich vorteilhafter Weise im Durchschnitt vor elektrischen Anlagen mit einer Netzlast in einem zweiten Bereich, beispielsweise einem höheren Bereich, aktiviert werden sollten.

Ferner ist erkannt worden, dass die Höhe der Netzlast von der Art der Netzlast und zusätzlich von der lokalen Uhrzeit abhängen kann. So kann beispielsweise bei Photovoltaikanlagen um die Mittagszeit eine hohe Netzlast vorliegen, dessen Zuschaltung während der Mittagszeit kritisch hinsichtlich der Netzstabilität sein kann. In der Nacht könnte sich die Hinzuschaltung einer Photovoltaikanlage hingegen als weniger kritisch erweisen. Entsprechend kann eine Regel für Photovoltaikanlagen implementiert werden, wonach die Zeitgrenzwerte derart bestimmt bzw. gesetzt werden, dass eine Aktivierung vorzugsweise nicht während der Mittagszeit erfolgt.

Weitere Kriterien, die die Bestimmung der Zeitgrenzwerte beeinflussen können, sind historische Daten. Wenn aus den historischen Daten beispielsweise hervorgeht, dass in den letzten Tagen vor dem Stromausfall die elektrische Anlage nur eine geringe Netzlast erzeugt/verbraucht hat, kann gefolgert werden, dass dies auch zum Zeitpunkt nach dem Stromausfall der Fall ist. Entsprechende Regeln können implementiert werden. Zusätzlich können beispielsweise Wetterprognosen bei der Bestimmung berücksichtigt werden. Auch kann mindestens ein lokal erfasster Netzparameter berücksichtigt werden.

Vorzugsweise können die vorgenannten Parameter priorisiert werden, wobei die Priorisierung von den tatsächlichen Werten der einzelnen Parameter abhängen kann.

Wie zuvor beschrieben wurde, kann in der Regelvorrichtung, beispielsweise in einer Speichereinrichtung der Regelvorrichtung, mindestens eine Bestimmungsregel in Form eines Algorithmus implementiert sein. Durch eine Abarbeitung dieser mindestens einen Regel kann dann der minimale und der maximale Zeitgrenzwert für jede einzelne elektrische Anlage festgelegt werden. Dann kann eine zufällige Einschaltverzögerungszeitspanne zwischen den Zeitgrenzwert bestimmt werden Es versteht sich, dass die beiden Teilschritte auch in einer Bestimmungsregel oder in einer Mehrzahl an Bestimmungsregeln umgesetzt werden kann.

Des Weiteren kann gemäß einer Ausführungsform vorgesehen sein, dass die Regeleinrichtung nach Ablauf der ersten Einschaltverzögerungszeitspanne (stets) automatisch das Herstellen einer elektrischen Verbindung bewirkt, beispielsweise das Aktivierungssignal sendet. Wie bereits beschrieben wurde, umfasst das Senden eines Aktivierungssignals auch ein direktes Schalten beispielsweise durch einen direkten Schaltimpuls. Mit anderen Worten kann vorgesehen sein, dass sich die elektrische Anlage (stets) automatisch nach Ablauf der ersten Einschaltverzögerungszeitspanne einschaltet. Gemäß einer bevorzugten Ausführungsform wird vorgeschlagen, dass die Detektionseinrichtung zum Detektieren von mindestens einer zweiten Einschaltbedingung nach Ablauf der ersten Einschaltverzögerungszeitspanne eingerichtet sein kann. Die Regeleinrichtung kann zum Bewirken des Herstellens einer elektrischen Verbindung frühestens nach Ablauf der weiteren Einschaltverzögerungszeitspanne eingerichtet sein. Vorzugsweise kann vor jedem Bewirken der elektrischen Verbindung, wie dem Aussenden des Aktivierungssignals, bzw. nach jedem Ablauf einer Einschaltverzögerungszeitspanne diese Auswertung durchgeführt werden. Die Regeleinrichtung kann zum Senden des Aktivierungssignals nur, also ausschließlich, bei einem positiven Detektionsergebnis eingerichtet sein. Die zweite Einschaltbedingung kann grundsätzlich mit der ersten Einschaltbedingung übereinstimmen. Indem vor einer tatsächlichen Freigabe einer Aktivierung der elektrischen Anlage nach Ablauf der ersten Einschaltverzögerungszeitspanne eine erneute Prüfung durchgeführt wird, kann ein noch stabileres und damit sicheres Wiederanfahren erreicht werden.

Vorzugsweise kann die zweite Einschaltbedingung eine Bedingung sein, bei deren Erfüllung sich die Zuschaltung bzw. Aktivierung der elektrischen Anlage als positiv, insbesondere netzstabilisierend, auswirkt. Beispielsweise kann die zweite Einschaltbedingung individuell für jede elektrische Anlage, beispielsweise in Abhängigkeit der oben genannten Parameter, wie die Systemklasse der elektrischen Anlage, die Art der Netzlast, die Höhe der Nennleistung der Netzlast der elektrischen Anlage und dergleichen, festgelegt werden. Wenn es sich beispielsweise bei der elektrischen Anlage um einen Energieerzeuger handelt, dann kann die zweite Einschaltbedingung derart definiert sein, dass sie nur dann erfüllt ist, wenn die Einspeisung von zusätzlicher elektrischer Energie in das Netz aktuell netzstabilisierend wirkt. Entsprechendes kann für einen Verbraucher festgelegt werden.

Auf diese Weise können Wechselrichter von Erzeugungsanlagen wie auch intelligente Verbraucher dazu verwendet werden, die Netzfrequenz zu stabilisieren, indem lokal verfügbare Informationen von der Regelvorrichtung, wie einem Software-Agenten, gemessen werden und abhängig von Kontext ihre eigene Einschaltverzögerungszeitspanne für das Zuschalten bestimmen.

Bei einem negativen Detektionsergebnis kann unterschiedlich verfahren werden. Beispielsweise kann die elektrische Anlage deaktiviert bleiben, bis sie manuell aktiviert wird. Gemäß einer bevorzugten Ausführungsform kann die Regeleinrichtung zum Bestimmen von mindestens einer weiteren Einschaltverzögerungszeitspanne bei einem negativen Detektionsergebnis eingerichtet sein. Die Regeleinrichtung kann zum Bewirken des Herstellens einer elektrischen Verbindung frühestens nach Ablauf der weiteren Einschaltverzögerungszeitspanne eingerichtet sein. Die Bestimmung der weiteren Einschaltverzögerungszeitspanne kann in ähnlicher Weise wie die Bestimmung der ersten Einschaltverzögerungszeitspanne erfolgen.

Vorzugsweise kann die Überprüfung der mindestens einen zweiten Einschaltbedingung nach jedem Ablauf einer Einschaltverzögerungszeitspanne durchgeführt werden. Ist das Detektionsergebnis positiv, so kann eine elektrische Verbindung hergestellt, vorzugsweise ein Aktivierungssignal ausgesendet werden. Ist das Detektionsergebnis negativ, kann vorzugsweise (immer) eine weitere Einschaltverzögerungszeitspanne bestimmt werden. Es ist erkannt worden, dass die zu bestimmende Einschaltverzögerungszeitspanne vorteilhafterweise länger sein sollte als die unmittelbar abgelaufene Einschaltverzögerungszeitspanne. Insbesondere ist es vorteilhaft, die Einschaltverzögerungszeiten jeweils exponentiell zu erhöhen. Beispielsweise kann zur Bestimmung der Einschaltverzögerungszeitspanne nachfolgende Gleichung genutzt und in der Regeleinrichtung implementiert sein:

$$T = \alpha + \beta \exp\{\gamma * \chi + \kappa\} \qquad \text{(a)}$$

wobei $\alpha, \beta, \gamma, \chi, \kappa$ dabei Funktionen der oben genannten Parameter sind, die zum Bestimmen des maximalen Zeitgrenzwerts und des minimalen Zeitgrenzwerts berücksichtigt werden können. Auf diese Weise kann sichergestellt werden, dass bestimmte An-/Abfahrrampen nicht überschritten werden können, auch wenn keine zentrale Steuerung vorhanden ist.

Bei der Bestimmung der weiteren Einschaltverzögerungszeiten können die oben genannten Parameter in ähnlicher Weise Berücksichtigung finden.

Die Überprüfung, ob die zweite Einschaltbedingung erfüllt ist, kann in beliebiger Weise erfolgen. Gemäß einer bevorzugten Ausführungsform der erfindungsgemäßen Regelvorrichtung kann die Detektionseinrichtung zum Vergleichen von mindestens einem Netzparameter mit einem zweiten zulässigen Netzparameterbereich zumindest nach Ablauf der ersten Einschaltverzögerungszeitspanne eingerichtet sein. Die Detektionseinrichtung kann zum Detektieren der zweiten Einschaltbedingung bei einem positiven Vergleichsergebnis eingerichtet sein. Insbesondere kann von der Detektionseinrichtung mindestens ein aktueller und/oder lokaler Netzparameter, wie die Netzfrequenz und/oder die Netzspannung und/oder der Netzstrom des Energieversorgungsnetzes, mit dem zweiten zulässigen Netzparameterbereich verglichen werden. Der mindestens eine Netzparameter kann beispielsweise mittels der zuvor beschriebenen Erfassungseinrichtung erfasst, insbesondere gemessen werden. In einfacher Weise kann überprüft werden, ob die zweite Einschaltbedingung erfüllt ist oder nicht.

Vorzugweise kann der zweite zulässige Netzparameterbereich einen Netzparameterbereich angeben, in dem sich ein Aktivieren der elektrischen Anlage netzstabilisierend auf das Energieversorgungsnetz auswirkt. So kann für einen Verbraucher ein zulässiger zweiter Netzparameterbereich definiert werden, der indiziert, dass (in noch zulässiger Weise) mehr Leistung in das Netz eingespeist wird als ihm entzogen wird. In entsprechender Weise kann ein zulässiger zweiter Netzparameterbereich für einen elektrischen Erzeuger definiert werden.

Ein weiterer Aspekt der Erfindung ist eine elektrische Anlage, insbesondere ein elektrischer Verbraucher oder ein elektrischer Energieerzeuger, umfassend mindestens eine zuvor beschriebene Regelvorrichtung (bzw. Steuervorrichtung).

Die Regelvorrichtung kann insbesondere in der elektrischen Anlage integriert sein. Beispielsweise kann ein Hardware- und/oder Softwaremodul, wie ein Softwareagent, in der elektrischen Anlage implementiert sein. Auch ist es vorstellbar, dass die Regelvorrichtung zwischen dem

Energieversorgungsnetz, wie einer Energieleitung, und der elektrischen Anlage geschaltet ist. Beispielhafte und nicht abschließende elektrische Anlagen sind Windkraftanlagen, Photovoltaikanlagen, Wärmekopplungsanlagen, Waschmaschine, Kühlschränke, Hausautomationssteuervorrichtungen, Serveranlagen, Ladestationen für Elektrofahrzeuge, Elektrofahrzeuge, Klimaanlagen, Durchlauferhitzer, etc.

Gemäß einer bevorzugten Ausführungsform der erfindungsgemäßen elektrischen Anlage kann die elektrische Anlage eingerichtet sein, nur nach Erhalt eines Aktivierungssignals von der Regelvorrichtung die elektrische Anlage zu aktivieren. Mit anderen Worten kann vorgesehen sein, dass sich die elektrische Anlage nach einem Stromausfall ausschließlich dann einschaltet, wenn die elektrische Anlage, beispielsweise die Schalteinrichtung, die einen Controller zum Hochfahren der elektrischen Anlage umfassen kann, das zuvor beschriebene Aktivierungssignal empfangen hat. Nach einem Empfang kann beispielsweise der Controller die elektrische Anlage in herkömmlicher Weise hochfahren.

Ein noch weiterer Aspekt der Erfindung ist ein Verfahren zum Regeln (bzw. Steuern) des Wiederanfahrens einer in einem Energieversorgungsnetz angeordneten elektrischen Anlage nach einem Stromausfall in dem Energieversorgungsnetz gemäß dem

Patentanspruch 10. Das Verfahren umfasst:

- Detektieren von mindestens einer ersten Einschaltbedingung,
- Bestimmen einer ersten Einschaltverzögerungszeitspanne nach Detektion der ersten Einschaltbedingung,
- wobei die erste Einschaltverzögerungszeitspanne eine zufällige Zeitspanne ist, und
- Bewirken des Herstellens einer elektrischen Verbindung zwischen der elektrischen Anlage und dem Energieversorgungsnetz frühestens nach Ablauf der ersten Einschaltverzögerungszeitspanne.

Das Verfahren kann insbesondere zum Betreiben der zuvor beschriebenen Regelvorrichtung (bzw. Steuervorrichtung) und/oder elektrischen Anlage verwendet werden.

Ein noch weiterer Aspekt der vorliegenden Erfindung ist ein System umfassend ein Energieversorgungsnetz und mindestens eine zuvor beschriebene elektrische Anlage. Vorzugsweise kann das System eine Vielzahl der zuvor beschriebenen elektrischen Anlagen umfassen.

Ein noch weiterer Aspekt der Erfindung ist ein Computerprogramm mit Instruktionen ausführbar auf einem Prozessor derart, dass eine elektrische Anlage gemäß dem zuvor beschriebenen Verfahren nach einem Stromausfall in dem Energieversorgungsnetz wieder hochgefahren wird.

Es gibt nun eine Vielzahl von Möglichkeiten, die erfindungsgemäße Steuervorrichtung, die erfindungsgemäße elektrische Anlage, das erfindungsgemäße Verfahren, das erfindungsgemäße System und das erfindungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1 eine schematische Ansicht eines Ausführungsbeispiels eines Systems gemäß der vorliegenden Erfindung;

Fig. 2 eine schematische Ansicht eines Ausführungsbeispiels einer Regelvorrichtung gemäß der vorliegenden Erfindung;

Fig. 3 ein schematisches Diagramm eines Ausführungsbeispiels eines Verfahrens gemäß der vorliegenden Erfindung;

Fig. 4 ein beispielhaftes Zeitdiagramm mit einer Mehrzahl von Einschaltverzögerungszeitspannen; und

Fig. 5 ein Diagramm mit beispielhaften ersten und zweiten zulässigen Netzparameterbereichen.

In den Figuren werden für gleiche Elemente gleiche Bezugszeichen verwendet.

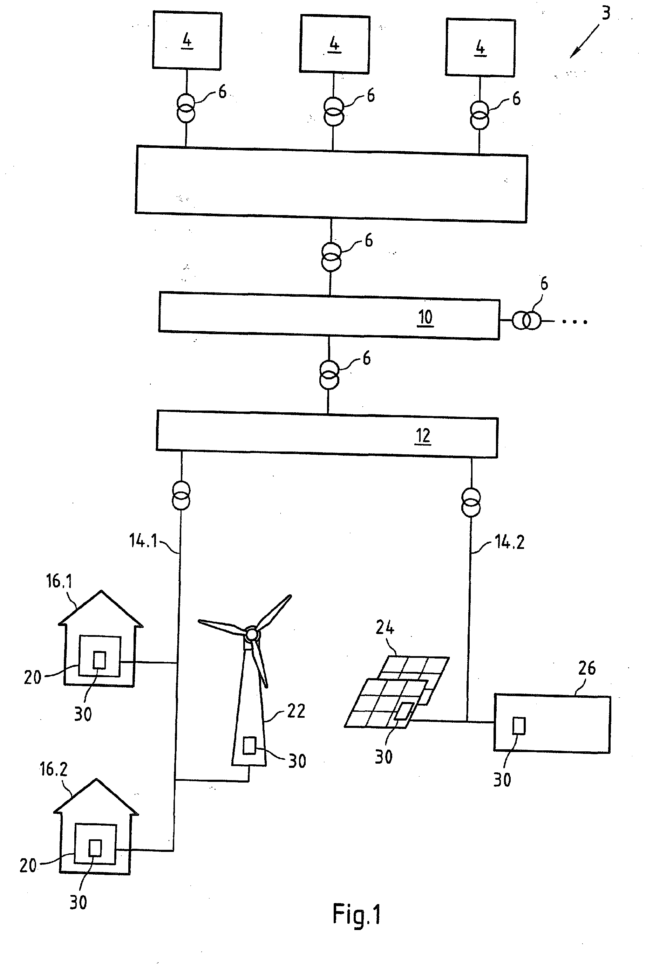

Figur 1 zeigt ein beispielhaftes System 2 mit einem Energieversorgungsnetz 8, 10, 12, 14, 14.1, 14.2 gemäß der vorliegenden Erfindung. Wie der Figur 1 zu entnehmen ist, umfasst das vorliegende System 2 herkömmliche, zentrale Kraftwerke 4, wie Kohlekraftwerke, Kernkraftwerke und Wasserkraftwerke. Die Kraftwerke 4 sind über geeignete Umrichter 6 an ein Höchstspannungsnetz 8 (meist 220 kV oder 380kV) angeschlossen.

Das Höchstspannungsnetz 8 ist ferner über einen geeigneten Umrichter 6 mit einem Hochspannungsnetz 10 (meist 110 kV) verbunden. An das Hochspannungsnetz 10 ist über einen weiteren Umrichter ein Mittelspannungsnetz 12 (1 kV- 50 kV) angeschlossen. Es versteht sich, dass weitere Mittelspannungsnetze 12 ebenso wie weitere (industrielle) Kraftwerke, industrielle Abnehmer, die Bahn, etc. an dem Hochspannungsnetz 10 angeschlossen sein können.

Darüber hinaus sind beispielhaft zwei Orts- bzw. Stadtnetze 14.1 und 14.2 über einen weiteren Umrichter 6 an das Mittelspannungsnetz 12 angeschlossenen. Bei den Orts- bzw. Stadtnetzen 14.1 und 14.2 handelt es sich insbesondere um Niederspannungsnetze 14.1 und 14.2 (400/230 V). Die verschiedenen Spannungsnetze bilden vorliegend das Energieversorgungsnetz.

Das erste beispielhafte Ortsnetz 14.1 umfasst eine Mehrzahl von Gebäuden 16.1, 16.2, die jeweils einen zentralen Stromeingang aufweisen. Innerhalb der Gebäude 16.1, 16.2 kann sich eine Vielzahl an (nicht dargestellten) elektrischen Verbrauchern, wie Kühlschränke, Waschmaschinen, etc. befinden. In dem ersten Gebäude ist beispielhaft als elektrische Anlage 18 eine zentrale Steuereinheit 18 eines Hausautomationssystems dargestellt, welches zur Steuerung zumindest der elektrischen Verbraucher und/oder Erzeuger in dem Gebäude 16.1 eingerichtet ist. Das zweite Gebäude 16.2 umfasst beispielhaft eine Kraftwärmekopplungseinheit 20. Die Kraftwärmekopplungseinheit 20 wird mit einem geeigneten Brennstoff, wie Erdgas, Erdöl, Biogas, Klärgas, Deponiegas, Pflanzenöl, Holz, Pellets, etc., betrieben, und ist eingerichtet, elektrische und thermische Energie zu erzeugen. Hierbei kann elektrische Energie auch ins Ortsnetz 14.1 gespeist werden.

Neben den beispielhaften Gebäuden 16.1, 16.2 ist an dem Niederspannungsnetz 14.1 vorliegend ein Energieerzeuger 22 in Form einer Windkraftanlage 22 angeschlossen. Es versteht sich, dass eine Mehrzahl an Windkraftanlagen in Form eines Windparks angeschlossen sein kann.

Ferner weist das zweite Niederspannungsnetz 14.2 ein Solarkraftwerk 24 auf, welches eingerichtet ist, elektrische Energie in das Niederspannungsnetz 14.2 einzuspeisen. Schließlich ist beispielhaft ein elektrischer Verbraucher in Form eines Kühlhauses 26 mit einem hohen elektrischen Bedarf dargestellt.

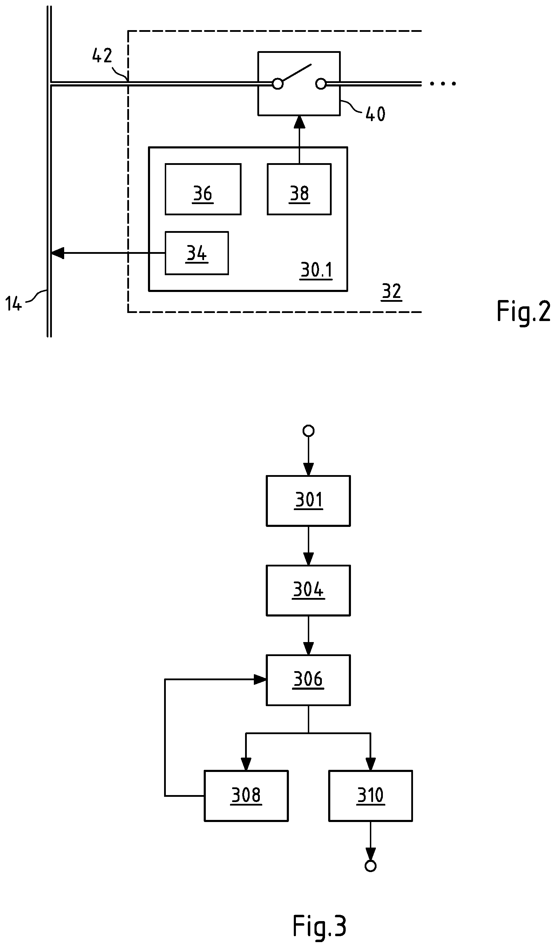

Vorzugsweise weist jedes der elektrischen Verbraucher und/oder Erzeuger 18 bis 26 eine Regelvorrichtung 30 bzw. Steuervorrichtung 30 gemäß der vorliegenden Erfindung auf. Die Regelvorrichtung 30 ist insbesondere eingerichtet, ein dezentrales Anfahren/Hochfahren der verschiedenen Verbrauchern und/oder Erzeugern 18 bis 26 zu regeln. Die Regelvorrichtung wird nachfolgend mittels der Figur 2 und der Figur 3 näher beschrieben.

Die Figur 2 zeigt ein Ausführungsbeispiel der Regelvorrichtung 30.1 (bzw. Steuervorrichtung 30.1) gemäß der vorliegenden Erfindung. In dem dargestellten Ausführungsbeispiel ist die Regelvorrichtung 30.1 in einer elektrischen Anlage 32 integriert. Beispielsweise kann die Regelvorrichtung 30.1 ein Hardwaremodul mit einem Prozessor, Speichermittel, etc. sein. Auch kann die Regelvorrichtung 30.1 ein Softwaremodul, wie ein Softwareagent, sein. In diesem Fall kann vorteilhafterweise die Hardware, wie ein Controller, der elektrischen Anlage 32 zur Ausführung des Softwareagenten genutzt werden. Es versteht sich, dass die Regelvorrichtung 30.1 aus Hard- und Softwaremodulen gebildet sein kann.

Die elektrische Anlage 32 ist über einen Stromanschluss 42 und eine Schalteinrichtung 40 mit dem Energieversorgungsnetz 14 verbunden.

Wie der Figur 2 zu entnehmen ist, weist die Regelvorrichtung 30.1 eine Detektionseinrichtung 34, eine Regeleinrichtung 36 (bzw. Steuereinrichtung 36) und eine Erfassungseinrichtung 38 auf. Die Erfassungseinrichtung 38 ist dazu eingerichtet, mindestens einen Netzparameter, wie die Netzspannung, die Netzfrequenz und/oder der Netzstrom, zu erfassen. Beispielsweise kann an einer Leitung des Energieversorgungsnetzes 14 mindestens ein entsprechender Messfühler angeordnet sein. Es versteht sich, dass der Netzparameter an einer beliebigen Stelle, beispielsweise an dem Stromanschluss 42 der elektrischen Anlage 32, gemessen werden kann.

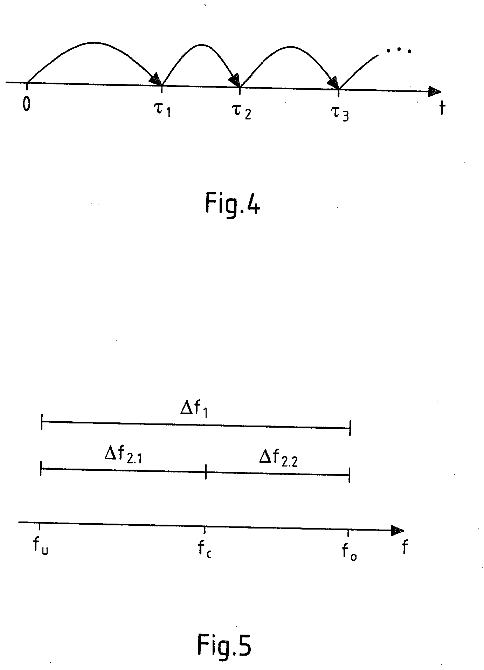

Die Detektionseinrichtung 34 ist insbesondere eingerichtet, eine erste Einschaltbedingung zu detektieren (Schritt 302), also zu überprüfen, ob die erste Einschaltbedingung erfüllt ist. Vorzugsweise kann der Detektionseinrichtung 34 für den Detektionsprozess der mindestens eine erfasste Netzparameter von der Erfassungseinrichtung 38 zur Verfügung gestellt werden. Dieser kann dann von der Detektionseinrichtung 34 ausgewertet werden. Beispielsweise kann der erfasste Netzparameter mit einem vorgegebenen zulässigen ersten Netzparameterbereich verglichen werden. Ein beispielhafter erster Netzparameterbereich $\Delta f_1$ für den Parameter Netzfrequenz f ist in der Figur 5 dargestellt. Wie zu erkennen ist, wird der erste Netzparameterbereich $\Delta f_1$ durch die untere Frequenz $f_u$ (z.B. 49,8 Hz) und die obere Frequenz $f_o$ (z.B. 50,2 Hz) festgelegt. Die genannten beispielhaften Frequenzwerte beziehen sich insbesondere auf das in Deutschland eingesetzte 50 Hz Netz. Die Detektionseinrichtung 34 überprüft für die Detektion der ersten Einschaltbedingung, ob die lokal und aktuell erfasste Netzfrequenz in dem Netzparameterbereich $\Delta f_1$ liegt oder nicht. In ähnlicher Weise kann alternativ oder zusätzlich zumindest die Netzspannung von der Detektionseinrichtung 34 ausgewertet werden.

Die Regeleinrichtung 36 ist dazu eingerichtet, nach der Detektion der ersten Einschaltbedingung, beispielsweise nachdem die Detektionseinrichtung 34 ein positives Vergleichsergebnis der Regeleinrichtung 36 mitgeteilt hat, eine erste zufällige Einschaltverzögerungszeitspanne zu bestimmen (Schritt 304). In einem ersten Teilschritt können zunächst ein minimaler und ein maximaler Zeitgrenzwert von der Regeleinrichtung bestimmt werden. Es versteht sich, dass diese auch bereits vorab, beispielsweise bei der Erstinstallation der Regelvorrichtung 30.1 festgelegt werden können. Vorteilhafterweise werden bei der Bestimmung der Zeitgrenzwerte verschiedene Parameter, wie die Systemklasse, die Art der Netzlast, die Höhe der Netzlast, die lokale Uhrzeit, etc., berücksichtigt. Dies kann insbesondere in Form einer vorgegebenen Bestimmungsregel abgebildet werden, in denen die aktuellen Parameterwerte, wie z.B. die tatsächliche Systemklasse der elektrischen Anlage 32 und die aktuelle lokale Uhrzeit, eingesetzt werden. So kann beispielsweise mindestens eine (Rechen-) Regel in der Regeleinrichtung implementiert sein, die von der Regeleinrichtung (unmittelbar) nach Detektion der Einschaltbedingung zur Bestimmung der Zeitgrenzwerte abgearbeitet wird. Nach der Bestimmung der Zeitgrenzwerte wird eine in dem bestimmten Grenzbereich liegende zufällige erste Einschaltverzögerungszeitspanne beispielsweise mit einem entsprechend konfigurierten Zufallsgenerator bestimmt. Es versteht sich, dass auch diese Bestimmung bereits bei der Erstinstallation durchgeführt worden sein kann.

Wie bereits beschrieben wurde, wird durch die Einschaltverzögerungszeitspanne das Einschalten der elektrischen Anlage 32 um eine zufällige Zeitdauer nach einer erstmaligen Detektion einer ersten Einschaltbedingung verzögert. Die elektrische Schalteinrichtung 40 ist insbesondere eingerichtet, die elektrische Anlage 32 nur dann zu aktivieren bzw. mit elektrischer Energie zu versorgen, wenn die Schalteinrichtung 40 (beispielsweise ein Controller der Schalteinrichtung) von der Regeleinrichtung 36 entsprechend angesteuert wird.

Es versteht sich, dass gemäß anderen Varianten auch vorgesehen sein kann, dass nach Ablauf der ersten Einschaltverzögerungszeitspanne die Regeleinrichtung 36 automatisch ein Aktivierungssignal sendet, derart, dass sich die elektrische Anlage 32 einschaltet. Dann entfallen die Schritte 306 und 308.

Nach Ablauf der ersten Einschaltverzögerungszeitspanne kann in einem optionalen zweiten Detektionsschritt 306 eine zweite Einschaltbedingung von der Detektionseinrichtung 34 überprüft werden. Insbesondere kann zunächst die Erfassungseinrichtung 38 mindestens einen lokalen und aktuellen Netzparameter der Detektionseinrichtung 34 zur Verfügung stellen. Die Detektionseinrichtung 34 kann in dem Schritt 306 den erfassten Netzparameter mit einem zweiten zulässigen Netzparameterbereich vergleichen.

Zwei beispielhafte zweite zulässige Netzparameterbereiche $\Delta f_{2.1}$ und $\Delta f_{2.2}$ sind für den Netzparameter Netzfrequenz f in der Figur 5 dargestellt. Ein erster beispielhafter zweiter Netzparameterbereich $\Delta f_{2.1}$ wird durch die untere Frequenz $f_u$ (z.B. 49,8 Hz) und die obere Frequenz $f_c$ (z.B. 50 Hz) bestimmt, während ein zweiter beispielhafter zweiter Netzparameterbereich $\Delta f_{2.2}$ durch die untere Frequenz $f_c$ (z.B. 50 Hz) und die obere Frequenz $f_o$ (z.B. 50, 2 Hz) bestimmt wird. Die Frequenz $f_c$ stellt die optimale Netzfrequenz dar. Befindet sich die aktuelle Netzfrequenz in dem Netzparameterbereich $\Delta f_{2.1}$, also unterhalb der optimalen Netzfrequenz $f_c$, ist dies ein Indiz dafür, dass nicht genug Leistung in das Energieversorgungsnetz 14 eingespeist wird (bzw. zu viel Leistung dem Energieversorgungsnetz 14 entzogen wird). Daher ist erkannt worden, dass dieser Netzparameterbereich insbesondere für elektrische Energieerzeuger als zulässiger zweiter Netzparameterbereich definiert werden sollte, da sich ein Zuschalten eines Energieerzeugers netzstabilisierend auswirkt. Hingegen verstärkt das Zuschalten eines Verbrauchers das Problem, dass nicht genug Leistung in das Energieversorgungsnetz 14 eingespeist wird (bzw. zu viel Leistung dem Energieversorgungsnetz 14 entzogen wird). Ein Verbraucher sollte daher nicht zugeschaltet werden. Umgekehrtes gilt für den zweiten dargestellten Netzparameterbereich. Bei diesem Netzparameterbereich wirkt das Zuschalten von Verbrauchern stabilisierend während Energieerzeuger gegenteilig wirken, da eine Netzfrequenz in diesem Bereich ein Indiz für zu viel Leistung im Energieversorgungsnetz 14 ist.

Das Detektionsergebnis kann insbesondere der Regeleinrichtung 36 von der Detektionseinrichtung 34 zur Verfügung gestellt werden. Ist das Detektionsergebnis positiv, dann wird die Herstellung einer elektrischen Verbindung bewirkt. Vorliegend sendet die Regeleinrichtung 36 in Schritt 310 ein Aktivierungssignal aus. Empfängt die elektrische Anlage 32 das Aktivierungssignal, dann schaltet sie sich selbst ein. Beispielsweise kann nach Erhalt des Aktivierungssignals ein Schalter der Schalteinrichtung 40 geschlossen werden und z.B. ein Controller die elektrische Anlage 32 in herkömmlicher Weise aktivieren bzw. einschalten. In einer Ausführungsform, bei der es sich bei der elektrischen Anlage 32 um eine regelbare elektrische Anlage 32 handelt, kann die Regeleinrichtung 36 zusätzlich vorgeben, mit welcher Netzlast, insbesondere die Höhe der Netzlast, die elektrische Anlage 32 aktiviert werden soll. Ferner kann die Regeleinrichtung 36 eingerichtet sein, in Abhängigkeit der aktuellen Netzparameter die Höhe der Netzlast zumindest während eines vorgegeben Zeitraums nach der Aktivierung zu regeln, beispielsweise zu erhöhen bzw. zu reduzieren.

Ist das Detektionsergebnis negativ, schaltet sich die elektrische Anlage 32 nicht unmittelbar ein. In einem Schritt 308 kann die Regeleinrichtung 36 insbesondere eine weitere Einschaltverzögerungszeitspanne bestimmen. Nach Ablauf der weiteren Einschaltverzögerungszeitspanne kann das Verfahren mit Schritt 306 fortgesetzt werden. Es versteht sich auch hier, dass anstelle von Schritt 306 eine automatische Aktivierung erfolgen kann.

Figur 4 zeigt einen beispielhaften Zeitverlauf, bei dem nach Ablauf der ersten Einschaltverzögerungszeitspanne zum Zeitpunkt $\tau_1$ und nach einem negativen Detektionsergebnis eine weitere Einschaltverzögerungszeitspanne bis zum Zeitpunkt $\tau_2$ bestimmt wird (usw.). Insbesondere können die Einschaltverzögerungszeitspannen nach jedem negativen Detektionsergebnis verlängert, vorzugsweise exponentiell verlängert werden.

Generell muss für alle Zeitpunkte die Summe der eingespeisten und verbrauchten Leistung im Wesentlichen Null ergeben. Bei einem Systemneustart nach Schwarzfall ist folglich dafür Sorge zu tragen, dass die Systemfrequenz f stabilisiert wird. Die zur Verfügung stehenden Regelenergiereserven dürfen also nicht überschritten werden, so dass die vertikale Netzlast (positive & negative Lasten/Erzeuger der Verteilnetze bzw. Energieerzeugungsnetze) nur sukzessiv und nur so schnell wieder zugeschaltet werden dürfen wie die Netzfrequenz es zulässt. Das System benötigt also Zeit zwischen einzelnen Zu-/Abschaltungen, die es den anderen Systembeteiligten möglich macht auf die Statusänderungen zu reagieren. Indem eine erfindungsgemäße Regelvorrichtung in einer Mehrzahl an dezentralen elektrischen Anlagen installiert wird, kann dem Gesamtsystem ausreichend Zeit gegeben werden, so dass ein Wiederanfahren des Netzes möglich ist.

**Patentansprüche**

1. Steuervorrichtung (30, 30.1) für eine in einem Energieversorgungsnetz (8, 10, 12, 14, 14.1, 14.2) angeordnete elektrische Anlage (18, 20, 22, 24, 26, 32) zum Steuern des Wiederanfahrens der elektrischen Anlage (18, 20, 22, 24, 26, 32) nach einem Stromausfall in dem Energieversorgungsnetz (8, 10, 12, 14, 14.1, 14.2), umfassend mindestens eine Detektionseinrichtung (34) eingerichtet zum Detektieren von mindestens einer ersten Einschaltbedingung, wobei die Steuervorrichtung (30, 30.1) ferner umfasst:

   - mindestens eine Steuereinrichtung (36) eingerichtet zum Bestimmen einer ersten Einschaltverzögerungszeitspanne nach Detektion der ersten Einschaltbedingung,
   - wobei die erste Einschaltverzögerungszeitspanne eine zufällige Zeitspanne ist, und
   - wobei die Steuereinrichtung (36) eingerichtet ist, ein Herstellen einer elektrischen Verbindung zwischen der elektrischen Anlage (18, 20, 22, 24, 26, 32) und dem Energieversorgungsnetz (8, 10, 12, 14, 14.1, 14.2) frühestens nach Ablauf der ersten Einschaltverzögerungszeitspanne zu bewirken, **dadurch gekennzeichnet, dass**
   - die zufällige erste Einschaltverzögerungszeitspanne zwischen einem minimalen Zeitgrenzwert und einem maximalen Zeitgrenzwert liegt, und
   - die Steuereinrichtung (36) zum Bestimmen des minimalen Zeitgrenzwerts und des maximalen Zeitgrenzwerts in Abhängigkeit von mindestens einem Parameter ausgewählt aus der Gruppe umfassend:

     - Systemklasse der elektrischen Anlage (18, 20, 22, 24, 26, 32),
     - regelbare Netzlast oder nicht regelbare Netzlast der der elektrischen Anlage (18, 20, 22, 24, 26, 32),
     - Art der Netzlast der elektrischen Anlage (18, 20, 22, 24, 26, 32),
     - Höhe der Nennleistung der Netzlast der elektrischen Anlage (18, 20, 22, 24, 26, 32),
     - historische Daten der elektrischen Anlage (18, 20, 22, 24, 26, 32),
     - lokale Uhrzeit der elektrischen Anlage (18, 20, 22, 24, 26, 32),
     - Dauer des Stromausfalls,

   eingerichtet ist.

2. Steuervorrichtung (30, 30.1) nach Anspruch 1, **dadurch gekennzeichnet, dass**

   - mindestens eine Erfassungseinrichtung (38) eingerichtet zum Erfassen von mindestens einem elektrischen Netzparameter vorgesehen ist,
   - wobei die Detektionseinrichtung (34) zum Vergleichen des erfassten Netzparameters mit einem ersten zulässigen Netzparameterbereich eingerichtet ist, und
   - wobei die Detektionseinrichtung (34) zum Detektieren einer Einschaltbedingung bei einem positiven Vergleichsergebnis eingerichtet ist.

3. Steuervorrichtung (30, 30.1) nach Anspruch 1 oder 2, **dadurch gekennzeichnet, dass**

   - die Steuereinrichtung (36) zum Bestimmen des minimalen Zeitgrenzwerts und des maximalen Zeitgrenzwerts in Abhängigkeit von mindestens einem erfassten Netzparameter eingerichtet ist.

4. Steuervorrichtung (30, 30.1) nach einem der vorherigen Ansprüche, **dadurch gekennzeichnet, dass**

   - die Detektionseinrichtung (34) zum Detektieren von mindestens einer zweiten Einschaltbedingung nach Ablauf der ersten Einschaltverzögerungszeitspanne eingerichtet ist, und
   - die Steuereinrichtung (36) zum Bewirken des Herstellens einer elektrischen Verbindung nur bei einem positiven Detektionsergebnis der zweiten Einschaltbedingung eingerichtet ist.

**5.** Steuervorrichtung (30, 30.1) nach Anspruch 4, **dadurch gekennzeichnet, dass**

- die Steuereinrichtung (36) zum Bestimmen von mindestens einer weiteren Einschaltverzögerungszeitspanne bei einem negativen Detektionsergebnis der zweiten Einschaltbedingung eingerichtet ist, und
- die Steuereinrichtung (36) zum Bewirken des Herstellens einer elektrischen Verbindung frühestens nach Ablauf der weiteren Einschaltverzögerungszeitspanne eingerichtet ist.

**6.** Steuervorrichtung (30, 30.1) nach Anspruch 4 oder 5, **dadurch gekennzeichnet, dass**

- die Detektionseinrichtung (34) zum Vergleichen von mindestens einem Netzparameter mit einem zweiten zulässigen Netzparameterbereich zumindest nach Ablauf der ersten Einschaltverzögerungszeitspanne eingerichtet ist, und
- die Detektionseinrichtung (34) zum Detektieren der zweiten Einschaltbedingung bei einem positiven Vergleichsergebnis eingerichtet ist.

**7.** Steuervorrichtung (30, 30.1) nach Anspruch 6, **dadurch gekennzeichnet, dass** der zweite zulässige Netzparameterbereich einen Netzparameterbereich angibt, in dem sich ein Aktivieren der elektrischen Anlage (18, 20, 22, 24, 26, 32) netzstabilisierend auf das Energieversorgungsnetz (8, 10, 12, 14, 14.1, 14.2) auswirkt.

**8.** Elektrische Anlage (18, 20, 22, 24, 26, 32), insbesondere ein elektrischer Verbraucher (18, 20, 26) oder ein elektrischer Energieerzeuger (22, 24), umfassend mindestens eine Steuervorrichtung (30, 30.1) gemäß dem vorherigen Ansprüchen.

**9.** Elektrische Anlage (18, 20, 22, 24, 26, 32) nach Anspruch 8, **dadurch gekennzeichnet, dass** die elektrische Anlage (18, 20, 22, 24, 26, 32) eingerichtet ist, nur nach Erhalt eines Aktivierungssignals von der Steuervorrichtung (30, 30.1) die elektrische Anlage (18, 20, 22, 24, 26, 32) zu aktivieren.

**10.** Verfahren zum Steuern des Wiederanfahrens einer in einem Energieversorgungsnetz (8, 10, 12, 14, 14.1, 14.2) angeordneten elektrischen Anlage (18, 20, 22, 24, 26, 32) nach einem Stromausfall in dem Energieversorgungsnetz (8, 10, 12, 14, 14.1, 14.2), umfassend:

- Detektieren von mindestens einer ersten Einschaltbedingung,
- Bestimmen einer ersten Einschaltverzögerungszeitspanne nach Detektion der ersten Einschaltbedingung,
- wobei die erste Einschaltverzögerungszeitspanne eine zufällige Zeitspanne ist, und
- Bewirken des Herstellens einer elektrischen Verbindung zwischen der elektrischen Anlage (18, 20, 22, 24, 26, 32) und dem Energieversorgungsnetz (8, 10, 12, 14, 14.1, 14.2) frühestens nach Ablauf der ersten Einschaltverzögerungszeitspanne,

**dadurch gekennzeichnet, dass**

- die zufällige erste Einschaltverzögerungszeitspanne zwischen einem minimalen Zeitgrenzwert und einem maximalen Zeitgrenzwert liegt, und
- das Bestimmen des minimalen Zeitgrenzwerts und des maximalen Zeitgrenzwerts in Abhängigkeit von mindestens einem Parameter ausgewählt aus der Gruppe umfassend:

- Systemklasse der elektrischen Anlage (18, 20, 22, 24, 26, 32),
- regelbare Netzlast oder nicht regelbare Netzlast der der elektrischen Anlage (18, 20, 22, 24, 26, 32),
- Art der Netzlast der elektrischen Anlage (18, 20, 22, 24, 26, 32),
- Höhe der Nennleistung der Netzlast der elektrischen Anlage (18, 20, 22, 24, 26, 32),
- historische Daten der elektrischen Anlage (18, 20, 22, 24, 26, 32),
- lokale Uhrzeit der elektrischen Anlage (18, 20, 22, 24, 26, 32),
- Dauer des Stromausfalls

geschieht.

**11.** System (2), umfassend:

- ein Energieversorgungsnetz (8, 10, 12, 14, 14.1, 14.2), und

- mindestens eine elektrische Anlage (18, 20, 22, 24, 26, 32) nach Anspruch 8.

12. Computerprogramm mit Instruktionen ausführbar auf einem Prozessor derart, dass eine elektrische Anlage (18, 20, 22, 24, 26, 32) gemäß dem Verfahren nach Anspruch 10 nach einem Stromausfall in dem Energieversorgungsnetz (8, 10, 12, 14, 14.1, 14.2) wieder hochgefahren wird.

**Claims**

1. A control apparatus (30, 30.1) for an electrical device (18, 20, 22, 24, 26, 32) arranged in a power supply network (8, 10, 12, 14, 14.1, 14.2) for controlling the restarting of the electrical device (18, 20, 22, 24, 26, 32) upon a blackout in the power supply network (8, 10, 12, 14, 14.1, 14.2), comprising at least one detection unit (34) configured to detect at least one first switch-on condition, wherein the control device (30, 30.1) further comprises:

   - at least one control unit (36) configured to determine a first switch-on delay period upon a detection of the first switch-on condition,
   - wherein the first switch-on delay time period is a random time period, and
   - wherein the control unit (36) is configured to cause an establishment of an electrical connection between the electrical device (18, 20, 22, 24, 26, 32) and the power supply network (8, 10, 12, 14, 14.1, 14.2) at the earliest after the first switch-on delay time period has elapsed,

   **characterized in that**

   - the random first switch-on delay time period is between a minimum time limit value and a maximum time limit value,
   - the control unit (36) is configured to determine the minimum time limit value and the maximum time limit value in response to at least one parameter selected from the group comprising:

     - system class of the electrical device (18, 20, 22, 24, 26, 32),
     - controllable network load or non-controllable network load of the electrical device (18, 20, 22, 24, 26, 32),
     - type of network load of the electrical device (18, 20, 22, 24, 26, 32),
     - level of rated power of the network load of the electrical device (18, 20, 22, 24, 26, 32),
     - historical data of the electrical device (18, 20, 22, 24, 26, 32),
     - local time of the electrical device (18, 20, 22, 24, 26, 32),
     - duration of the blackout.

2. Control device (30, 30.1) according to claim 1, **characterized in that**

   - at least one measuring unit (38) is configured to detect at least one electrical network parameter,
   - wherein the detection unit (34) is configured to compare the detected network parameter with a first permissible network parameter range, and
   - wherein the detection unit (34) is configured to detect a switch-on condition in case of a positive comparison result.

3. Control device (30, 30.1) according to claim 1 or 2, **characterized in that**

   - the control unit (36) is configured to determine the minimum time limit value and the maximum time limit value in dependence on at least one detected network parameter.

4. Control device (30, 30.1) according to one of the previous claims, **characterized in that**

   - the detection unit (34) is configured to detect at least a second switch-on condition upon an expiry of the first switch-on delay period, and
   - the control unit (36) is configured to cause an establishment of an electrical connection only upon a positive detection result of the second switch-on condition.

5. Control device (30, 30.1) according to claim 4, **characterized in that**

- the control unit (36) is configured to determine at least one further switch-on delay period in the event of a negative detection result of the second switch-on condition, and
- the control unit (36) is configured to cause an establishment of an electrical connection at the earliest after the further switch-on delay time period has elapsed.

6. Control device (30, 30.1) according to claim 4 or 5, **characterized in that**

   - the detection unit (34) is configured to compare at least one network parameter with a second permissible network parameter range at least upon the expiry of the first switch-on delay time period, and
   - the detection unit (34) is configured to detect the second switch-on condition in case of a positive comparison result.

7. Control device (30, 30.1) according to claim 6, **characterized in that** the second permissible network parameter range indicates a network parameter range in which an activation of the electrical device (18, 20, 22, 24, 26, 32) has a network-stabilizing effect on the power supply network (8, 10, 12, 14, 14.1, 14.2).

8. Electrical device (18, 20, 22, 24, 26, 32), in particular an electrical load (18, 20, 26) or an electrical energy generator (22, 24), comprising at least one control device (30, 30.1) according to the previous claims.

9. Electrical device (18, 20, 22, 24, 26, 32) according to claim 8, **characterized in that** the electrical device (18, 20, 22, 24, 26, 32) is configured to activate the electrical device (18, 20, 22, 24, 26, 32) only after receiving an activation signal from the control device (30, 30.1).

10. Method for controlling the restart of an electrical device (18, 20, 22, 24, 26, 32) arranged in a power supply network (8, 10, 12, 14, 14.1, 14.2) upon a blackout in the power supply network (8, 10, 12, 14, 14.1, 14.2), comprising:

    - detecting at least a first switch-on condition,
    - determining a first switch-on delay period upon detection of the first switch-on condition,
    - wherein the first switch-on delay time period is a random time period, and
    - causing an establishing of an electrical connection between the electrical device (18, 20, 22, 24, 26, 32) and the power supply network (8, 10, 12, 14, 14.1, 14.2) at the earliest after the first switch-on delay time period has elapsed, **characterized in that**
    - the random first switch-on delay time period is between a minimum time limit value and a maximum time limit value, and
    - wherein determining the minimum time limit value and the maximum time limit value occurs as a function of at least one parameter selected from the group comprising:
    - system class of the electrical device (18, 20, 22, 24, 26, 32),
    - controllable network load or non-controllable network load of the electrical device (18, 20, 22, 24, 26, 32),
    - type of network load of the electrical device (18, 20, 22, 24, 26, 32),
    - level of rated power of the network load of the electrical device (18, 20, 22, 24, 26, 32),
    - historical data of the electrical device (18, 20, 22, 24, 26, 32),
    - local time of the electrical device (18, 20, 22, 24, 26, 32),
    - duration of the blackout.

11. System (2), comprising:

    - a power supply network (8, 10, 12, 14, 14.1, 14.2), and
    - at least one electrical device (18, 20, 22, 24, 26, 32) according to claim 8.

12. A computer program with instructions executable on a processor such that an electrical device (18, 20, 22, 24, 26, 32) is restarted according to the method of claim 10 upon a blackout in the power supply network (8, 10, 12, 14, 14.1, 14.2).

**Revendications**

1. Dispositif de commande (30, 30.1) pour une installation électrique (18, 20, 22, 24, 26, 32) disposée dans un réseau d'alimentation électrique (8, 10, 12, 14, 14.1, 14.2) pour commander le redémarrage de l'installation électrique (18, 20, 22, 24, 26, 32) après une panne de courant dans le réseau d'alimentation électrique (8, 10, 12, 14, 14.1, 14.2), comprenant au moins un dispositif de détection (34) configuré pour détecter au moins une première condition de mise en marche, le dispositif de commande (30, 301) comprenant en outre:

- au moins un appareil de commande (36) configuré pour déterminer une première période de retard de mise en marche après la détection de la première condition de mise en marche,
- la première période de retard de mise en marche étant une période de temps aléatoire, et
- l'appareil de commande (36) étant configuré pour provoquer l'établissement d'une connexion électrique entre l'installation électrique (18, 20, 22, 24, 26, 32) et le réseau d'alimentation électrique (8, 10, 12, 14, 14.1, 14.2) au plus tôt après expiration de la première période de retard de mise en marche,

**caractérisé**

- **en ce que** la première période de retard de mise en marche se situe entre une valeur limite de temps minimale et une valeur limite de temps maximale, et
- **en ce que** l'appareil de commande (36) est configuré pour déterminer la valeur limite de temps minimale et la valeur limite de temps maximale en fonction d'au moins un paramètre choisi dans le groupe comprenant :

- Classe de système de l'installation électrique (18, 20, 22, 24, 26, 32),
- charge de réseau réglable ou charge de réseau non réglable de l'installation électrique (18, 20, 22, 24, 26, 32),
- Type de charge de réseau de l'installation électrique (18, 20, 22, 24, 26, 32),
- Niveau de la puissance nominale de la charge de réseau de l'installation électrique (18, 20, 22, 24, 26, 32),
- Données historiques de l'installation électrique (18, 20, 22, 24, 26, 32),
- Heure locale de l'installation électrique (18, 20, 22, 24, 26, 32),
- Durée de la panne de courant.

2. Dispositif de commande (30, 30.1) selon la revendication 1, **caractérisé**

- **en ce qu'**au moins un dispositif de détection (38) configuré pour détecter au moins un paramètre de réseau électrique est prévu,
- le dispositif de détection (34) étant configuré pour comparer paramètre de réseau détecté avec une première plage de paramètres de réseau admissible, et
- le dispositif de détection (34) étant configuré pour détecter une condition de mise en marche dans le cas d'un résultat de comparaison positif.

3. Dispositif de commande (30, 30.1) selon la revendication 1 ou 2, **caractérisé en ce que** l'appareil de commande (36) est configuré pour déterminer la valeur limite de temps minimale et la valeur limite de temps maximale en fonction d'au moins un paramètre de réseau détecté.

4. Dispositif de commande (30, 30.1) selon l'une des revendications précédentes, **caractérisé**

- **en ce que** le dispositif de détection (34) est configuré pour détecter au moins une deuxième condition de mise en marche après expiration de la première période de retard de mise en marche, et
- **en ce que** l'appareil de commande (36) est configuré pour provoquer l'établissement d'une connexion électrique uniquement lors d'un résultat de détection positif de la deuxième condition de mise en marche.

5. Dispositif de commande (30, 30.1) selon la revendication 4, **caractérisé**

- **en ce que** l'appareil de commande (36) est configuré pour déterminer au moins une période de retard de mise en marche supplémentaire lors d'un résultat de détection négatif de la deuxième condition de mise en marche, et
- **en ce que** l'appareil de commande (36) est configuré pour provoquer l'établissement d'une connexion électrique au plus tôt après expiration de la période de retard supplémentaire de mise en marche.

6. Dispositif de commande (30, 30.1) selon la revendication 4 ou 5, **caractérisé**

- **en ce que** le dispositif de détection (34) est configuré pour comparer au moins un paramètre de réseau avec une deuxième plage de paramètres de réseau admissible au moins après expiration de la première période de retard de mise en marche, et

- **en ce que** le dispositif de détection (34) est configuré pour détecter la deuxième condition de mise en marche dans le cas d'un résultat de comparaison positif.

7. Dispositif de commande (30, 30.1) selon la revendication 6, **caractérisé en ce que** la deuxième plage de paramètres de réseau admissible indique une plage de paramètres de réseau dans laquelle l'activation de l'installation électrique (18, 20, 22, 24, 26, 32) a un effet de stabilisation de réseau sur le réseau d'alimentation électrique (8, 10, 12, 14, 14.1, 14.2).

8. Installation électrique (18, 20, 22, 24, 26, 32), notamment un consommateur électrique (18, 20, 26) ou un générateur d'énergie électrique (22, 24), comprenant au moins un dispositif de commande (30, 30.1) selon les revendications précédentes.

9. Installation électrique (18, 20, 22, 24, 26, 32) selon la revendication 8, **caractérisée en ce que** l'installation électrique (18, 20, 22, 24, 26, 32) est configurée pour activer l'installation électrique (18, 20, 22, 24, 26, 32) seulement après avoir reçu un signal d'activation du dispositif de commande (30, 30.1).

10. Procédé pour commander le redémarrage d'une installation électrique (18, 20, 22, 24, 26, 32) disposée dans un réseau d'alimentation électrique (8, 10, 12, 14, 14.1, 14.2) après une panne de courant dans le réseau d'alimentation électrique (8, 10, 12, 14, 14.1, 14.2), comprenant :

   - Détecter au moins une première condition de mise en marche,
   - Déterminer une première période de retard de mise en marche après la détection de la première condition de mise en marche,
   - la première période de retard de mise en marche étant une période de temps aléatoire, et
   - Provoquer l'établissement d'une connexion électrique entre l'installation électrique (18, 20, 22, 24, 26, 32) et le réseau d'alimentation électrique (8, 10, 12, 14, 14.1, 14.2) au plus tôt après expiration de la période de retard de mise en marche,

   **caractérisé**

   - **en ce que** la première période aléatoire de retard de mise en marche se situe entre une valeur limite de temps minimale et une valeur limite de temps maximale, et
   - **en ce que** la détermination de la valeur limite de temps minimale et de la valeur limite de temps maximale est effectuée en fonction d'au moins un paramètre choisi dans le groupe comprenant :
   - Classe de système de l'installation électrique (18, 20, 22, 24, 26, 32),
   - charge de réseau réglable ou charge de réseau non réglable de l'installation électrique (18, 20, 22, 24, 26, 32),
   - Type de charge de réseau de l'installation électrique (18, 20, 22, 24, 26, 32),
   - Niveau de la puissance nominale de la charge de réseau de l'installation électrique (18, 20, 22, 24, 26, 32),
   - Données historiques de l'installation électrique (18, 20, 22, 24, 26, 32),
   - Heure locale de l'installation électrique (18, 20, 22, 24, 26, 32),
   - Durée de la panne de courant.

11. Système (2) comprenant :

   - un réseau d'alimentation électrique (8, 10, 12, 14, 14.1, 14.2), et
   - au moins une installation électrique (18, 20, 22, 24, 26, 32) selon la revendication 8.

12. Programme informatique avec des instructions exécutables sur un processeur de telle sorte qu'une installation électrique (18, 20, 22, 24, 26, 32) est redémarré selon le procédé de la revendication 10 après une panne de courant dans le réseau d'alimentation électrique (8, 10, 12, 14, 14.1, 14.2).

Fig.1

42

36

38

40

34

30.1

32

14

Fig.2

301

304

306

308

310

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009050042 A1
- EP 2273647 A2
- US 2014001845 A1